# EUROPÄISCHE PATENTSCHRIFT

(11) **EP 4 440 807 B1**
(45) Veröffentlichungstag und Bekanntmachung des Hinweises auf die Patenterteilung: **22.04.2026**
(21) Anmeldenummer: 22822913.4
(22) Anmeldetag: 28.11.2022
(51) Int. Cl.: B29C 45/14

(54) **VERFAHREN ZUR HERSTELLUNG EINES INTERIEURBAUTEILS FÜR FAHRZEUGE**
METHOD FOR PRODUCING AN INTERIOR COMPONENT FOR VEHICLES
PROCÉDÉ DE PRODUCTION DE COMPOSANT INTÉRIEUR POUR VÉHICULES

(30) Priorität: 03.12.2021 DE 102021131885
(43) Veröffentlichungstag der Anmeldung: 09.10.2024
(73) Patentinhaber: Lisa Dräxlmaier GmbH, 84137 Vilsbiburg (DE)
(72) Erfinder: GSCHAIDER, Wolfgang, 84100 Niederaichbach (DE); REIS, Marco, 84155 Bodenkirchen (DE); BUTZ, Willi, 84098 Andermannsdorf (DE); HUBAUER, Franz, 84175 Schalkham (DE); GRAF, Friedrich, 84307 Eggenfelden (DE)
(86) Internationale Anmeldenummer: PCT/EP2022/083402
(87) Internationale Veröffentlichungsnummer: WO 2023/099371

(56) Entgegenhaltungen:
- DE-A1- 102005 026 766
- DE-A1- 102012 208 534

## Beschreibung

### Technisches Gebiet

Die vorliegende Erfindung betrifft ein Herstellungsverfahren für ein Interieurbauteil für Fahrzeuge, wobei das Interieurbauteil insbesondere dazu geeignet ist einen Fahrzeuginnenraum zu beheizen. Zur Herstellung des Interieurbauteils wird ein Heizelement in eine Spritzgussform eingebracht. Danach wird eine Kunststoffschmelze in die Spritzgussform eingespritzt, um einen Grundkörper herzustellen auf dessen Oberfläche des Heizelements angeordnet ist. Nachdem sich die Kunststoffschmelze verfestigt hat, wird der Grundkörper mit dem Heizelement aus der Spritzgussform entfernt. Anschließend wird eine Verkleidung auf den Grundkörper aufgebracht, wobei die Verkleidung das Heizelement und zumindest einen Teil der Oberfläche des Grundkörpers bedeckt.

### Stand der Technik

Aus dem Stand der Technik sind beheizbare Interieurbauteile für Fahrzeuge bekannt, die im Betrieb oder während der Nutzung des Fahrzeugs in unmittelbaren Kontakt mit dem Fahrer bzw. dem Fahrgast stehen. Hierunter fallen beispielsweise Sitzheizungen. Bei den bekannten beheizbaren Interieurbauteilen wird eine Heizmatte zwischen einem nachgiebigen Grundkörper, beispielsweise einem Schaumstoffkern, und einer Verkleidung, beispielsweise einem Sitzbezug, angeordnet. Aufgrund der Nachgiebigkeit des Grundkörpers kann die Heizmatte bei der Herstellung eines solch beheizbaren Interieurbauteils einfach auf den Grundkörper aufgelegt werden, ohne dass die Gefahr besteht, dass die Heizmatte oder eine mit der Heizmatte verbundene Leitungen beim Verkleiden geknickt und dadurch beschädigt wird.

Andere Interieurbauteilen, beispielsweise Armaturen oder Innenraumverkleidungen weisen in der Regel keinen nachgiebigen Grundkörper auf. Vielmehr wird hier ein harter, unverformbarer, also ein nicht nachgiebiger, Grundkörper verwendet. Fertigt man derart formstabile Interieurbauteile mittels der bekannten Herstellungsverfahren, besteht die Gefahr, dass die Heizmatten beim Verkleiden an den Kanten des Grundkörpers knicken und beschädigt werden. Dies führt zu einer hohen Ausschussrate und in der Folge auch zu einem hohen Herstellungsaufwand mit hohen Herstellungskosten.

Darüber hinaus sind derartige Interieurbauteile regelmäßig mit einer enganliegenden Verkleidung, wie beispielsweise Leder, versehen. Dementsprechend würde sich die Kontur der auf dem Grundkörper aufliegenden Heizmatte durch die Verkleidung hindurchdrücken. Dies hat eine für den Nutzer unerwünschte Optik zur Folge.

DE 10 2012 208 534 A1 offenbart ein Interieurbauteil mit Wärmestrahler. Dabei ist ein Flächenheizelement in einen Schichtverbund integriert.

DE 10 2005 026 766 A1 beschreibt ein Verfahren zur Herstellung eines beheizbaren Formkörpers, insbesondere für Außenrückblinkspiegel mit einem Heizelement.

### Beschreibung der Erfindung

Ausgehend von dem oben aufgeführten Stand der Technik ist es eine Aufgabe der vorliegenden Erfindung, ein Herstellungsverfahren für Interieurbauteile für Fahrzeuge anzugeben, welches die oben genannten Probleme und Nachteile des Standes der Technik ausräumt. Insbesondere ist es eine Aufgabe der vorliegenden Erfindung, ein verbessertes Herstellungsverfahren für Interieurbauteile mit geringerem Herstellungsaufwand anzugeben.

Die Aufgabe wird mit einem Verfahren zur Herstellung eines Interieurbauteils gemäß Anspruch 1 gelöst. Vorteilhafte Weiterbildungen der Erfindung sind Gegenstand der abhängigen Ansprüche.

Die erfindungsgemäße Lösung besteht darin, dass das Verfahren zur Herstellung des Interieurbauteils für Fahrzeuge folgende Verfahrensschritte aufweist. Zu Beginn wird ein Heizelement in einer Spritzgussform angeordnet. Danach wird eine Kunststoffschmelze in die Spritzgussform eingespritzt. Die in die Spritzgussform eingespritzte Kunststoffschmelze verfestigt sich anschließend vorzugsweise durch Abkühlen und/oder durch eine chemische Reaktion. Dadurch wird ein Grundkörper hergestellt, auf dessen Oberfläche das Heizelement angeordnet ist. Das Heizelement ist vorzugsweise im Grundkörper eingefasst. Anschließend wird der Grundkörper mit dem Heizelement aus der Spritzgussform entfernt. Im darauffolgenden Verfahrensschritt wird eine Verkleidung aufgebracht, um das Heizelement und zumindest einen Teil des Grundkörpers zu verkleiden. Das erfindungsgemäße Herstellungsverfahren bewirkt in vorteilhafterweise, dass das Heizelement Bestandteil des Grundkörpers ist, insbesondere in den Grundkörper eingelassen bzw. eingefasst ist, und nicht nachträglich an die Form des Grundkörpers angepasst werden muss. Dies hat zum einen den Vorteil, dass die Ausschussrate während des Herstellungsprozesses erheblich minimiert wird, da elektrische Bauteile nicht mehr an den Kanten des Grundkörpers abgeknickt werden müssen. Zum anderen, dass die Kontur des Heizelements nach dem Verkleiden nicht mehr durch die Verkleidung hindurchdrücken kann.

Die Kunststoffschmelze kann einen erwärmten Hartkunststoff, beispielsweise einen thermoplastischen Kunststoff, aufweisen. Beispielsweise kann die Kunststoffschmelzen ein Polycarbonat und/oder um ein Polystyrol mit dessen Copolymeren, wie Acrylnitril-Butadien-Styrol, umfassen. Bei einer beispielhaften Weiterbildung besteht die Kunststoffschmelze aus einem Hartkunststoff. Die Verwendung von erwärmten Hartkunststoff in der oder als Kunststoffschmelze hat den Vorteil, dass der Grundkörper biegesteif, unnachgiebig und/oder unverformbar sein kann und das Interieurbauteil beispielsweise als Armatur und/oder als Verkleidungsbauteil im Innenraum eines Fahrzeugs verwendet werden kann.

Zusätzlich kann die Kunststoffschmelze Gaseinschlüsse, insbesondere Einschlüsse von einem oder mehreren inerten Gasen, aufweisen. Dies hat den Vorteil, dass der Grundkörper ein verringertes Eigengewicht und wärmeisolierende Eigenschaften aufweist.

Gemäß einer beispielhaften Weiterbildung des Herstellungsverfahrens, handelt es sich bei dem Einspritzen um einen einzigen Spritzvorgang. Der Einspritzvorgang kann im One-Shot-Verfahren erfolgen. Dies hat den Vorteil, dass sich die Dauer des Herstellungsverfahrens verkürzt. Darüber hinaus kommt es während des Einspritzvorgangs nicht zu einem partiellen Erstarren und der Kunststoffschmelze.

Das Heizelement wird bei einer weiteren beispielhaften Ausführungsform des Herstellungsverfahrens vor dem Einspritzen der Kunststoffschmelze in der Spritzgussform fixiert. Beispielsweise kann das Heizelement durch Stecker und/oder Fixierlöcher im Heizelement an bzw. in der Spritzgussform fixiert werden. Alternativ oder zusätzlich kann die Spritzgussform Stecker und/oder Fixierlöcher zur Fixierung für das Heizelement aufweisen.

Eine Fixierung des Heizelements bewirkt, dass das Heizelement während des Einspritzens in der Spritzgussform nicht verrutschen kann. Dies hat den Vorteil, dass das durch das Herstellungsverfahren hergestellte Interieurbauteil geringere Herstellungstoleranzen aufweisen kann bzw. das Heizelement genauer am Grundkörper positioniert werden kann.

Gemäß einer weiteren beispielhaften Ausführungsform wird während des Einspritzvorgangs die erste Oberfläche des Heizelements vom Kunststoff, insbesondere der Kunststoffschmelze, bedeckt bzw. bespritzt. Die der ersten Oberfläche gegenüberliegende zweite Oberfläche des Heizelements bleibt während des Einspritzvorgangs im Wesentlichen frei von Kunststoff, insbesondere frei von der Kunststoffschmelze. Das heißt, dass ein Benetzen der zweiten Oberfläche mit Kunststoff unerwünscht ist und sich das Benetzen der zweiten Oberfläche mit Kunststoff nur auf die bei der Fertigung gegebenen Herstellungstoleranzen beschränkt.

Bei einer Weiterbildung der vorgenannten Ausführungsform wird die zweite Oberfläche nach dem Aufbringen der Verkleidung von der Verkleidung, insbesondere nur von der Verkleidung, bedeckt. Beispielsweise wird die Verkleidung unmittelbar auf das Heizelement aufgebracht. Vorzugsweise liegt die zweite Oberfläche des Heizelements nach dem Aufbringen der Verkleidung an der Verkleidung an. Dies hat den Vorteil, dass die vom Heizelement abgegeben Wärme unmittelbar auf die Verkleidungsschicht übertragen werden kann und an einen Fahrzeuginnenraum abgegeben werden kann. Dadurch kann der Wirkungsgrad des Interieurbauteils in Hinblick auf das Aufwärmen des Fahrzeuginnenraums erhöht werden.

An dem Heizelement ist ein Anschlussstecker zur Steuerung und/oder Stromversorgung vorgesehen. Der Anschlussstecker und das Heizelement werden während des Einspritzvorgangs gemeinsam von der Kunststoffschmelze hinterspritzt. Das heißt, dass sowohl der Anschlussstecker als auch das Heizelement während des Einspritzvorgangs von der Kunststoffschmelze zumindest teilweise bedeckt werden. Dies hat den Vorteil, dass die Verbindung zwischen dem Anschlussstecker und dem Heizelement nach dem Verfestigen der Kunststoffschmelze durch den Grundkörper verstärkt wird.

Bei einer Weiterbildung der beispielhaften Ausführungsform, bei der das Heizelement einen Anschlussstecker aufweist, können der Anschlussstecker und das Heizelement derart hinterspritzt werden, dass der Anschlussstecker nur teilweise von der Kunststoffschmelze eingefasst wird. Dies hat den Vorteil, dass der Anschlussstecker bei dem fertig hergestellten Interieurbauteil aus dem Grundkörper herausragt und somit von außen zugänglich bleibt.

Die Spritzgussform weist eine Niederhaltevorrichtung auf. Vorzugsweise wird das Heizelement mit der Niederhaltevorrichtung niedergehalten. Ist an dem Heizelement ein Anschlussstecker angeordnet, kann die Niederhaltevorrichtung den Anschlussstecker während des Einspritzvorgangs niederhalten. Dies hat den Vorteil, dass das durch das Herstellungsverfahren hergestellte Interieurbauteil geringere Herstellungstoleranzen aufweisen kann bzw. das Heizelement genauer am Grundkörper positioniert werden kann. Die Niederhaltevorrichtung kann beispielsweise eine Feder aufweisen, die das Heizelement und/oder den Anschlussstecker am Heizelement gegen eine Außenwand der Spritzgussform drückt.

Bei einer weiteren beispielhaften Ausführungsform ist das Heizelement über ein Leiterelement mit einem Anschlussstecker zur Steuerung und/oder Stromversorgung verbunden ist. Vorzugsweise werden das Heizelement und das Leiterelement während des Einspritzvorgangs so gemeinsam hinterspritzt bzw. von der Kunststoffschmelze bedeckt, dass zumindest ein Teil des Leiterelements und der Anschlussstecker nicht von der Kunststoffschmelze eingefasst werden. Dies bewirkt, dass bei dem fertigen Interieurbauteil zumindest ein Teil des Leiterelements und der Anschlussstecker aus dem Interieurbauteil herausragen. Dies hat den Vorteil, dass der Anschlussstecker von außen sehr gut zugänglich ist und besonders einfach an ein Strom- und/oder Steuerungsnetz des Fahrzeugs angeschlossen werden kann, in das das Interieurbauteil verbaut wird. Der Anschlussstecker kann über das Leiterelement in Bezug auf das fertig hergestellte Interieurbauteil bewegt werden.

Bei einer beispielhaften Weiterbildung der vorgenannten Ausführungsform sind das Heizelement und zumindest ein Teil des Leiterelements, nach dem Aufbringen der Verkleidung, zwischen der Verkleidung und dem Grundkörper angeordnet. Vorzugsweise ist sowohl das Heizelement als auch ein Teil des Leiterelements vom Grundkörper eingefasst. Dies hat insbesondere bei großen Interieurbauteilen den Vorteil, dass das Heizelement von einer Anschlussstelle für den Anschlussstecker beabstandet angeordnet sein kann, ohne das ein zusätzliches, verlängerndes Leiterelement benötigt wird.

Das Heizelement kann eine elektrische Flächenheizung sein. Das Heizelement kann insbesondere eine oder mehrere elektrische Heizschleifen aufweisen. Vorzugsweise ist das Heizelement eine Vlies-Litzenheizung, eine Wärmfolie, und/oder ein Heizgewebe. Dies hat den Vorteil, dass das Heizelement eine möglichst flache Bauform aufweist. Bei einer beispielhaften Weiterbildung weist das Heizelement einen Temperatursensor auf. Bei dem Temperatursensor kann es sich um einen elektrischen Thermistor, insbesondere um einen NTC-Thermistor, handeln. Ein Heizelement mit einem Temperatursensor hat den Vorteil, dass das Heizelement besser geregelt werden kann und/oder eine Überhitzung des Heizelements verhindert werden kann.

Das durch das erfindungsgemäße Herstellungsverfahren hergestellte Interieurbauteil kann eine Interieurbauteil eines Fahrzeugs, insbesondere eines Kraftfahrzeugs, eines Luftfahrzeugs und/oder eines Schiffs sein. Vorzugsweise ist das Interieurbauteil eine Armatur oder ein Innenverkleidungsbauteil eines Fahrzeugs.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Weitere Merkmale, Vorteile und Ausführungsformen der Erfindung ergeben sich aus der nachfolgenden Beschreibung von Ausführungsformen des erfindungsgemäßen Innenausstattungsteils und anhand der Figuren. Es zeigen:
- Fig. 1: eine schematische Darstellung eines beispielhaften Heizelements für ein Herstellungsverfahren gemäß eines ersten Ausführungsbeispiels;
- Fig. 2: eine schematische Schnittansicht eines ersten Verfahrensschritts des Herstellungsverfahrens gemäß dem ersten Ausführungsbeispiel;
- Fig. 3: eine schematische Schnittansicht eines zweiten Verfahrensschritts des Herstellungsverfahrens gemäß dem ersten Ausführungsbeispiel;
- Fig. 4: eine schematische Schnittansicht eines dritten Verfahrensschritts des Herstellungsverfahrens gemäß dem ersten Ausführungsbeispiel;
- Fig. 5: eine perspektivische Darstellung eines beispielhaften Interieurbauteils nach einem vierten Verfahrensschritt des Herstellungsverfahrens gemäß dem ersten Ausführungsbeispiel;
- Fig. 6: eine schematische Schnittansicht eines ersten Verfahrensschritts des Herstellungsverfahrens gemäß eines zweiten Ausführungsbeispiels;
- Fig. 7: eine schematische Schnittansicht eines zweiten Verfahrensschritts des Herstellungsverfahrens gemäß dem zweiten Ausführungsbeispiel; und
- Fig. 8: eine schematische Darstellung eines beispielhaften Interieurbauteils nach einem dritten und einem vierten Verfahrensschritt des Herstellungsverfahrens gemäß dem zweiten Ausführungsbeispiel.

### Wege zur Ausführung der Erfindung

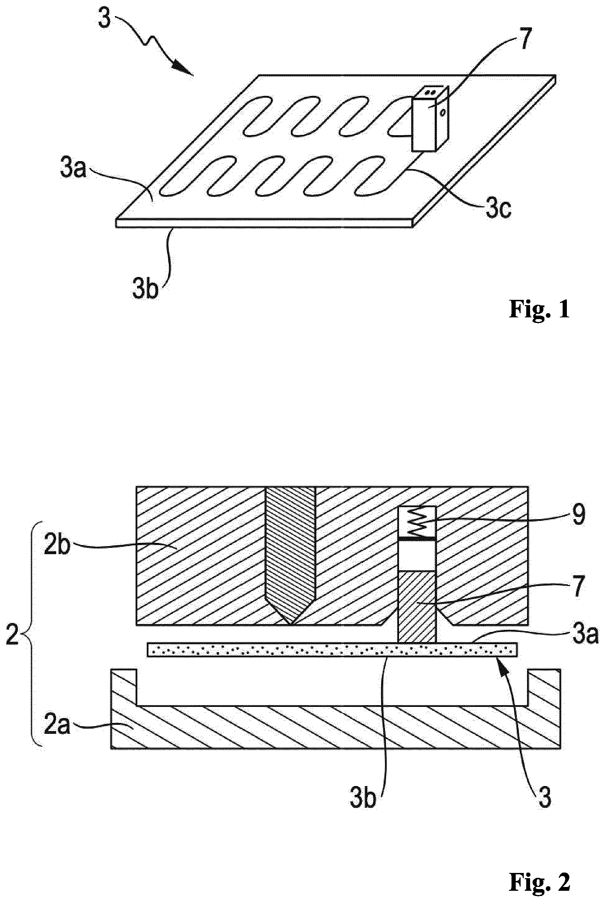

Fig. 1 zeigt eine schematische Darstellung eines beispielhaften Heizelements 3, wie es für ein Herstellungsverfahren gemäß eines ersten Ausführungsbeispiels verwendet werden kann. Das Heizelement 3 umfasst eine Folie, ein Vlies, oder ein ähnlich dünnes Grundmaterial. Das Heizelement 3, insbesondere des Grundmaterial des Heizelement 3, weist eine erste Oberfläche 3a und eine zweite Oberfläche 3b auf. Die zweite Oberfläche 3b ist der erste Oberfläche 3a gegenüberliegend angeordnet und von dieser abgewandt.

Im oder auf dem Heizelement 3, insbesondere im oder auf dem Grundmaterial des Heizelements 3, sind Heitzlitzen 3c angeordnet. Die Heizlitzen 3c sind mit einem Anschlussstecker 7 elektrisch kontaktiert. Der Anschlussstecker 7 ist dazu geeignet mit einem Stromversorger und/oder einer Steuerungsvorrichtung verbunden zu werden.

Die Fig. 2-4 zeigen verschiedene Verfahrensschritte des Herstellungsverfahrens gemäß des ersten Ausführungsbeispiels in chronologischer Abfolge. Fig. 2 zeigt den ersten Verfahrensschritt des beispielhaften Herstellungsverfahrens, bei dem das Heizelement 3 gemäß Fig. 1 in einer Spritzgussform 2 angeordnet wird. Dabei wird die zweite Oberfläche 3b des Heizelements 3 auf ein erstes Spritzgussformteil 2a der Spritzgussform 2 aufgelegt. Danach wird ein zweites Spritzgussformteil 2b der Spritzgussform 2 gegenüber der ersten Oberfläche 3a des Heizelements 3 angeordnet.

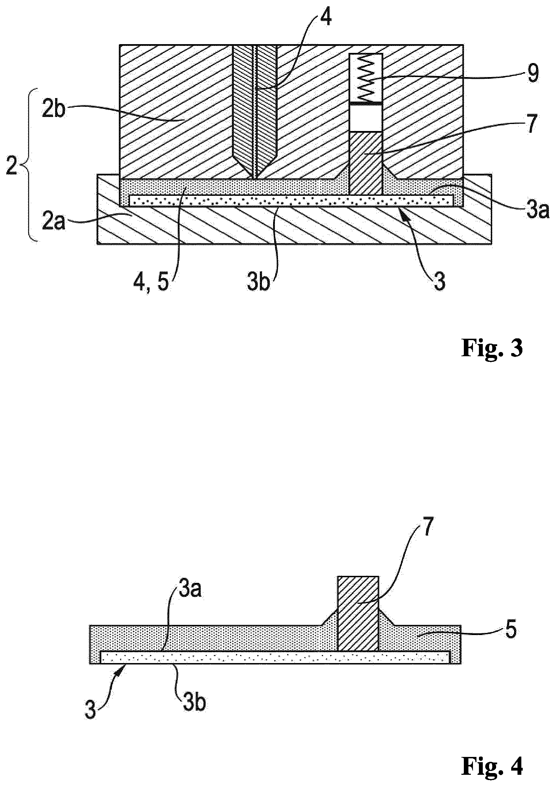

Das zweite Spritzgussformteil 2b umfasst im dargestellten Ausführungsbeispiel eine Düse für eine Kunststoffschmelze 4 (vgl. Fig. 3) und eine Niederhaltevorrichtung 9. Die Niederhaltevorrichtung 9 ist dazu ausgebildet, den Anschlussstecker 7 während des in Fig. 3 gezeigten Einspritzvorgangs zu fixieren, insbesondere niederzuhalten.

Wie in Fig. 3 gezeigt, bildet die Spritzgussform 2, insbesondere das erste Spritzgussformteil 2a und das zweite Spritzgussformteil 2b der Spritzgussform 2, einen Hohlraum, insbesondere eine Kavität. In diesen Hohlraum wird die Kunststoffschmelze 4 eingespritzt. Bei der Kunststoffschmelze 4 kann es sich beispielsweise um einen erwärmten Hartkunststoff 4, insbesondere um einen erwärmten Thermoplast 4 handeln. Das Einspritzen umfasst vorzugsweise einen einzigen Spritzvorgang, so dass sich die Kunststoffschmelze 4 im zeitlichen Verlauf des Einspritzens nicht oder nur unwesentlich abkühlt.

Das Heizelement 3 ist während des Einspritzens im Hohlraum, insbesondere in der Kavität, angeordnet, wobei die erste Oberfläche 3a dem Hohlraum zugewandt ist. Die zweite Oberfläche 3b liegt an dem ersten Spritzgussformteil 2a an. Durch das Einspritzen der Kunststoffschmelze 4 in den Hohlraum, wird das Heizelement 3 hinterspritzt. Dabei wird insbesondere die erste Oberfläche 3a von der Kunststoffschmelze 4 bedeckt. Die zweite Oberfläche 3b bleibt im Wesentlichen frei von der Kunststoffschmelze 4.

Im dargestellten Ausführungsbeispiel wird auch der Anschlussstecker 7 teilweise von der Kunststoffschmelze 4 hinterspritzt. Die Verbindung zwischen dem Anschlussstecker 7 und dem Heizelement 3 wird während des Einspritzens von der Kunststoffschmelze 4 eingefasst.

Nach dem Einspritzen der Kunststoffschmelze 4, wird die Kunststoffschmelze 4 durch Abkühlung und/oder durch eine thermische Reaktion verfestigt. Die verfestigte Kunststoffschmelze 4 bildet einen Grundkörper 5. Auf der Oberfläche des Grundkörpers 5 ist das Heizelement 3 angeordnet. Das Heizelement 3 wird von dem Grundkörper 5 eingefasst.

Fig. 4 zeigt den Grundkörper 5, das Heizelement 3 und den Anschlussstecker 7, nach dem diese aus der Spritzgussform 2 entfernt worden. Die Verbindung zwischen dem Anschlussstecker 7 und dem Heizelement 3 ist im Grundkörper 5 angeordnet. Das Heizelement 3 ist vom Grundkörper 5 eingefasst. Die zweite Oberfläche 3b des Heizelements 3 ist bündig mit einer Oberfläche des Grundkörpers 5. Die zweite Oberfläche 3b und die sich daran bündig anschließende Oberfläche des Grundkörpers 5 bilden eine Sichtseite.

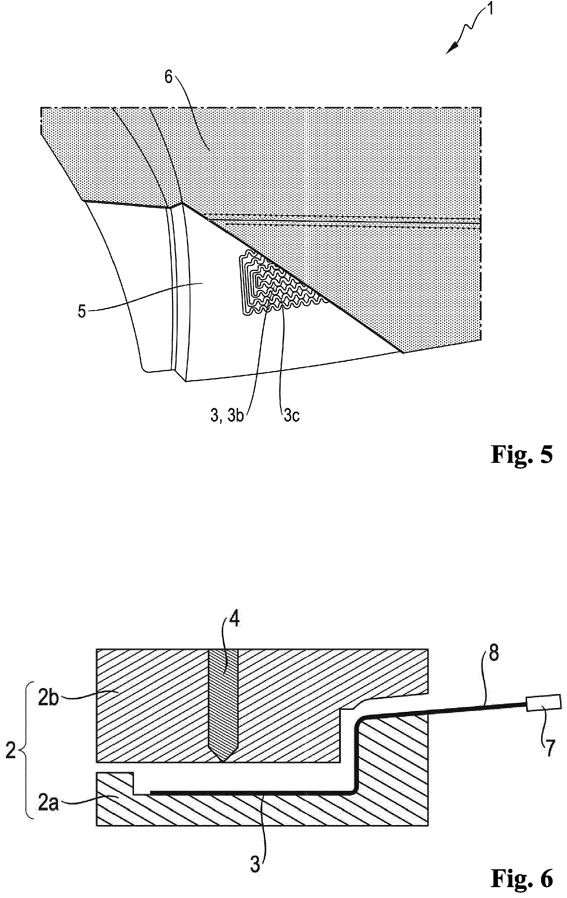

Figur 5 zeigt ein fertig hergestelltes Interieurbauteil 1 in einer perspektivischen Darstellung. Um das Interieurbauteil 1 fertig herzustellen, wurde in einem weiteren Verfahrensschritt eine Verkleidung 6 auf die Sichtseite aufgebracht. Zum besseren Verständnis wurde ein Teil der Verkleidung 6 in Fig. 5 nicht dargestellt, so dass zumindest ein Teil des Heizelements 3, insbesondere die zweite Oberfläche 3b und die Heizlitzen 3c, sowie ein Teil des Goldkörpers 5 sichtbar ist.

Durch die Verkleidung 6 wird das Heizelement 3 und zumindest ein Teil der Oberfläche des Grundkörpers 5 bedeckt bzw. verkleidet. Vorzugsweise wird durch die Verkleidung die gesamte Sichtseite bedeckt bzw. verkleidet. Die zweite Oberfläche 3b des Heizelements 3 liegt an der Innenseite der Verkleidung 6 an. Bei dem fertig hergestellten Interieurbauteil 1 ist das Heizelement 3 für einen Nutzer nicht mehr sichtbar.

Die Fig. 6-8 zeigen verschiedene Verfahrensschritte eines Herstellungsverfahrens gemäß eines zweiten Ausführungsbeispiels in chronologischer Abfolge. Bei dem Herstellungsverfahren gemäß des zweiten Ausführungsbeispiels unterscheidet sich das Heizelement 3 von dem Heizelement 3 des ersten Ausführungsbeispiels dahingehend, dass der Anschlussstecker 7 über ein Leiterelement 8 mit dem Heizelement 3 verbunden ist. Bei dem Leiterelement 8 handelt es sich vorzugsweise um einen oder mehrere elektrische Leiter.

Analog dem in Fig. 2 gezeigten Verfahrensschritt wird das Heizelement 3 in einer Spritzgussform 2 angeordnet. Dabei wird das Heizelement 3 auf ein erstes Spritzgussformteil 2a der Spritzgussform 2 aufgelegt. Mit dem Heizelement 3 wird auch ein Teil des Leiterelements 8 auf das erste Spritzgussformteil 2a aufgelegt. In Bereichen, in denen das Leiterelement 8 aufgrund von Krümmung in der Spritzgussform 2 gekrümmt wird, kann die Spritzgussform 2 Stützrippen aufweisen. Im dargestellten Ausführungsbeispiel kann insbesondere das erste Spritzgussformteil 2a im Bereich der Ecke rechts unten, bei der das Leiterelement 8 um 90° nach oben gebogen wird, eine Stützrippe aufweisen.

Nach dem Anordnen des Heizelements 3 in der Spritzgussform 2, insbesondere dem ersten Spritzgussformteil 2a, wird ein zweites Spritzgussformteil 2b der Spritzgussform 2 gegenüber dem Heizelement 3 angeordnet. Das zweite Spritzgussformteil 2b umfasst eine Düse für die Kunststoffschmelze 4. Anders als bei dem ersten Ausführungsbeispiel, kann bei dem Herstellungsverfahren gemäß dem zweiten Ausführungsbeispiel auf eine Niederhaltevorrichtung 9 im zweiten Spritzgussformteil 2b verzichtet werden.

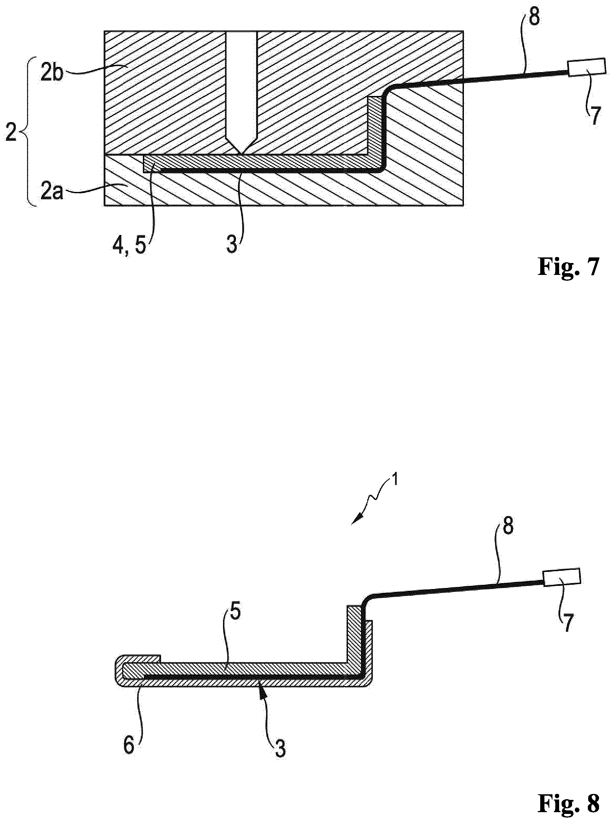

Wie in Fig. 7 gezeigt, bildet die Spritzgussform 2, insbesondere das erste Spritzgussformteil 2a und das zweite Spritzgussformteil 2b, einen Hohlraum, insbesondere eine Kavität. In diesen Hohlraum wird die Kunststoffschmelze 4 eingespritzt. Bei der Kunststoffschmelze 4 kann es sich beispielsweise um einen erwärmten Hartkunststoff 4, insbesondere um einen erwärmten Thermoplast 4 handeln. Das Einspritzen umfasst vorzugsweise einen einzigen Spritzvorgang, so dass sich die Kunststoffschmelze 4 im zeitlichen Verlauf des Einspritzens nicht oder nur unwesentlich abkühlt.

Das Heizelement 3 und ein Teil des Leiterelements 8 sind während des Einspritzens in dem Hohlraum, insbesondere in der Kavität, angeordnet. Durch das Einspritzen der Kunststoffschmelze 4 in den Hohlraum, werden das Heizelement 3 und ein Teil des Leiterelements 8 hinterspritzt. Der Anschlussstecker 7 und der Teil des Leiterelements 8, der nicht im Hohlraum angeordnet ist, bleiben frei von der Kunststoffschmelze 4. Die Oberfläche des Heizelements 3, die an dem ersten Spritzgussformteil 2a anliegt, bleibt im Wesentlichen frei von der Kunststoffschmelze 4.

Nach dem Einspritzen der Kunststoffschmelze 4 wird die Kunststoffschmelze 4 durch Abkühlung und/oder durch eine thermische Reaktion verfestigt. Die verfestigte Kunststoffschmelze 4 bildet einen Grundkörper 5. Auf der Oberfläche des Grundkörpers 5 ist das Heizelement 3 angeordnet. Das Heizelement 3 wird von dem Grundkörper 5 eingefasst.

Figur 8 zeigt das fertig hergestellte Interieurbauteil 1 in einer Schnittansicht. Um das Interieurbauteil 6 fertig herzustellen, wurde eine Verkleidung 6 aufgebracht, nachdem der Grundkörper 5 mit dem Heizelement 3 aus der Spritzgussform 2 entnommen wurde. Das Heizelement 3 und ein Teil des Leiterelements 8 sind bei dem fertig hergestellten Interieurbauteil 1 zwischen der Verkleidung 6 und den Grundkörper 5 angeordnet. Durch die Verkleidung 6 wird das Heizelement 3, ein Teil des Leiterelements 8 und zumindest ein Teil der Oberfläche des Grundkörpers 5 bedeckt bzw. verkleidet.

Der Anschlussstecker 7 bleibt über den nicht im Grundkörper 5 eingefassten Teil des Leiterelements 8 zugänglich und in Bezug auf das Interieurbauteil 1 bewegbar. Dies hat den Vorteil, dass der Anschlussstecker 7 bei der Montage des Interieurbauteils 1, beispielsweise in einem Fahrzeug, in Bezug auf das Interieurbauteil 1 flexibel und frei bewegt werden kann und dadurch die Montage des Interieurbauteils 1 erleichtert wird.

### BEZUGSZEICHENLISTE

- 1: Interieurbauteil
- 2: Spritzgussform
- 2a: erstes Spritzgussformteil
- 2b: zweites Spritzgussformteil
- 3: Heizelement
- 3a: erste Oberfläche des Heizelements
- 3b: zweite Oberfläche des Heizelements
- 3c: Heizlitze
- 4: Kunststoffschmelze
- 5: Grundkörper
- 6: Verkleidung
- 7: Anschlussstecker
- 8: Leiterelement
- 9: Niederhaltevorrichtung

## Patentansprüche

1. Verfahren zur Herstellung eines Interieurbauteils (1) für Fahrzeuge mit folgenden Verfahrensschritten:
a) Anordnen eines Heizelements (3) in einer Spritzgussform (2),
b) Einspritzen einer Kunststoffschmelze (4) in die Spritzgussform (2), um einen Grundkörper (5) herzustellen, auf dessen Oberfläche das Heizelement (3) angeordnet ist,
c) Entfernen des Grundkörpers (5) mit Heizelement (3) aus der Spritzgussform (2), nachdem sich die Kunststoffschmelze (4) verfestigt hat,
d) Aufbringen einer Verkleidung (6), um das Heizelement (3) und zumindest einen Teil der Oberfläche des Grundkörpers (5) zu verkleiden, wobei am Heizelement (3) ein Anschlussstecker (7) zur Steuerung und/oder Stromversorgung angeordnet ist, wobei der Anschlussstecker (7) und das Heizelement (3) während des Einspritzvorgangs gemeinsam mit der Kunststoffschmelze (4) hinterspritzt werden, **gekennzeichnet dadurch ,dass** die Spritzgussform (2) eine Niederhaltevorrichtung (9) aufweist und die Niederhaltevorrichtung (9) den Anschlussstecker (7) während des Einspritzvorgangs niederhält.

2. Verfahren nach Anspruch1, **dadurch gekennzeichnet, dass** es sich bei dem Einspritzen der Kunststoffschmelze (4) um einen einzigen Spritzvorgang handelt.

3. Verfahren nach einem der vorhergehenden Ansprüche, **dadurch gekennzeichnet, dass**, das Heizelement (3) vor dem Einspritzen der Kunststoffschmelze (4) in der Spritzgussform (2) fixiert wird.

4. Verfahren nach einem der vorhergehenden Ansprüche, **dadurch gekennzeichnet, dass** das Heizelement (3) eine erste Oberfläche (3a) und eine der ersten Oberfläche (3a) gegenüberliegende zweite Oberfläche (3b) aufweist, wobei die erste Oberfläche (3a) während des Einspritzvorgangs von der Kunststoffschmelze (4) bedeckt wird und die zweite Oberfläche (3b) im Wesentlichen frei von der Kunststoffschmelze (4) bleibt.

5. Verfahren nach Anspruch 4, **dadurch gekennzeichnet, dass** die zweite Oberfläche (3b), nach dem Aufbringen der Verkleidung (6), der Verkleidung (6) zugewandt ist.

6. Verfahren nach einem der vorhergehenden Ansprüche, **dadurch gekennzeichnet, dass** der Anschlussstecker (7) und das Heizelement (3) derart mit der Kunststoffschmelze (4) hinterspritzt werden, dass der Anschlussstecker (7) nur teilweise von der Kunststoffschmelze (4) eingefasst wird.

7. Verfahren nach einem der Ansprüche 1-5, **dadurch gekennzeichnet, dass** das Heizelement (3) über ein Leiterelement (8) mit einem Anschlussstecker (7) zur Steuerung und/oder Stromversorgung verbunden ist, wobei das Heizelement (3) und das Leiterelement (8) während des Einspritzvorgangs derart gemeinsam mit der Kunststoffschmelze (4) hinterspritzt werden, dass zumindest ein Teil des Leiterelements (8) und der Anschlussstecker (7) nicht von der Kunststoffschmelze (4) eingefasst werden.

8. Verfahren nach Anspruch 7, **dadurch gekennzeichnet, dass** das Heizelement (3) und zumindest ein Teil des Leiterelements (8) nach dem Aufbringen der Verkleidung (6) zwischen der Verkleidung (6) und dem Grundkörper (5) angeordnet sind.

## Claims

1. Method for producing an interior component (1) for vehicles, comprising the following method steps:
a) arranging a heating element (3) in an injection mold (2),
b) injecting a plastic melt (4) into the injection mold (2) in order to produce a base body (5) on the surface of which the heating element (3) is arranged,
c) removing the base body (5) with the heating element (3) from the injection mold (2) after the plastic melt (4) has solidified,
d) applying a covering (6) in order to cover the heating element (3) and at least a part of the surface of the base body (5), wherein a connector plug (7) for control and/or power supply is arranged on the heating element (3),
wherein the connector plug (7) and the heating element (3) are back-injected together with the plastic melt (4) during the injection process,
**characterized in that** the injection mold (2) comprises a holding-down device (9) and the holding-down device (9) holds down the connector plug (7) during the injection process.

2. Method according to claim 1, **characterized in that** the injecting of the plastic melt (4) is a single injection process.

3. Method according to any of the preceding claims, **characterized in that** the heating element (3) is fixed in the injection mold (2) before the plastic melt (4) is injected.

4. Method according to any of the preceding claims, **characterized in that** the heating element (3) has a first surface (3a) and a second surface (3b) opposite the first surface (3a), wherein the first surface (3a) is covered by the plastic melt (4) during the injection process and the second surface (3b) remains substantially free from the plastic melt (4).

5. Method according to claim 4, **characterized in that** the second surface (3b), after the application of the covering (6), faces the covering (6).

6. Method according to any of the preceding claims, **characterized in that** the connector plug (7) and the heating element (3) are back-injected with the plastic melt (4) in such a way that the connector plug (7) is only partially enclosed by the plastic melt (4).

7. Method according to any of claims 1-5, **characterized in that** the heating element (3) is connected via a conductor element (8) to a connector plug (7) for control and/or power supply, wherein the heating element (3) and the conductor element (8) are back-injected together with the plastic melt (4) during the injection process in such a way that at least a part of the conductor element (8) and the connector plug (7) are not enclosed by the plastic melt (4).

8. Method according to claim 7, **characterized in that** the heating element (3) and at least a part of the conductor element (8) are arranged between the covering (6) and the base body (5) after the application of the covering (6).

## Revendications

1. Procédé de fabrication d'un élément d'habillage intérieur (1) pour véhicules, comprenant les étapes suivantes :
a) disposer un élément chauffant (3) dans un moule d'injection (2),
b) injecter une matière plastique fondue (4) dans le moule d'injection (2) afin de fabriquer un corps de base (5) sur la surface duquel est disposé l'élément chauffant (3),
c) retirer le corps de base (5) avec l'élément chauffant (3) du moule d'injection (2) après solidification de la matière plastique fondue (4),
d) appliquer un revêtement (6) afin de recouvrir l'élément chauffant (3) et au moins une partie de la surface du corps de base (5), un connecteur (7) destiné au contrôle et/ou à l'alimentation électrique étant disposé sur l'élément chauffant (3),
le connecteur (7) et l'élément chauffant (3) étant moulés par injection secondaire conjointement avec la matière plastique fondue (4) pendant l'opération d'injection, **caractérisé en ce que** le moule d'injection (2) comporte un dispositif de maintien (9) et **en ce que** le dispositif de maintien (9) maintient le connecteur (7) pendant l'opération d'injection.

2. Procédé selon la revendication 1, **caractérisé en ce que** l'injection de la matière plastique fondue (4) est une opération d'injection unique.

3. Procédé selon l'une des revendications précédentes, **caractérisé en ce que** l'élément chauffant (3) est fixé dans le moule d'injection (2) avant l'injection de la matière plastique fondue (4).

4. Procédé selon l'une des revendications précédentes, **caractérisé en ce que** l'élément chauffant (3) comporte une première surface (3a) et une seconde surface (3b) opposée à la première surface (3a), la première surface (3a) étant recouverte par la matière plastique fondue (4) pendant l'opération d'injection et la seconde surface (3b) restant sensiblement exempte de matière plastique fondue (4).

5. Procédé selon la revendication 4, **caractérisé en ce que** la seconde surface (3b), après application du revêtement (6), est orientée vers le revêtement (6).

6. Procédé selon l'une des revendications précédentes, **caractérisé en ce que** le connecteur (7) et l'élément chauffant (3) sont moulés par injection secondaire avec la matière plastique fondue (4) de telle manière que le connecteur (7) n'est que partiellement enchâssé dans la matière plastique fondue (4).

7. Procédé selon l'une des revendications 1 à 5, **caractérisé en ce que** l'élément chauffant (3) est connecté via un élément conducteur (8) à un connecteur (7) destiné au contrôle et/ou à l'alimentation électrique, l'élément chauffant (3) et l'élément conducteur (8) étant moulés par injection secondaire conjointement avec la matière plastique fondue (4) pendant l'opération d'injection de sorte qu'au moins une partie de l'élément conducteur (8) et le connecteur (7) ne sont pas enchâssés dans la matière plastique fondue (4).

8. Procédé selon la revendication 7, **caractérisé en ce que** l'élément chauffant (3) et au moins une partie de l'élément conducteur (8) sont disposés entre le revêtement (6) et le corps de base (5) après l'application du revêtement (6).
